**Europäisches Patentamt**

**European Patent Office**

**Office européen des brevets**

(11) Veröffentlichungsnummer: **0 200 846**
A1

## (12) EUROPÄISCHE PATENTANMELDUNG

(21) Anmeldenummer: **85890106.9**

(22) Anmeldetag: **08.05.85**

(51) Int. Cl.⁴: **E 06 B 3/66**, B 01 D 53/28

(43) Veröffentlichungstag der Anmeldung: **12.11.86**
**Patentblatt 86/46**

(84) Benannte Vertragsstaaten: **BE CH DE FR GB IT LI LU NL SE**

(71) Anmelder: **Steinleitner, Wolfgang, Otakarstrasse 3, A-4451 Garsten (AT)**

(72) Erfinder: **Steinleitner, Wolfgang, Otakarstrasse 3, A-4451 Garsten (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

(54) **Isolierscheibe.**

(57) Eine Isolierscheibe (1) besteht aus wenigstens zwei miteinander unter Zwischenlage eines im Randbereich umlaufenden Abstandhalters (2) verbundenen Einzelscheiben (1a). Der Abstandhalter (2) enthält in vom Isolierscheibeninneren her luftzugänglichen Aufnahmen (5) hygroskopisches Material.

Um eine Isolierscheibe (1) zu schaffen, die sich durch beste Qualität auszeichnet und für eine einfache, wirtschaftliche und auch vollautomatische Herstellung geeignet ist, sind die Aufnahmen (5) mit einer Mischsubstanz (6) aus dem hygroskopischen Material und einem Silicon gefüllt.

## Isolierscheibe

Die Erfindung betrifft eine Isolierscheibe aus wenigstens zwei miteinander unter Zwischenlage eines im Randbereich umlaufenden Abstandhalters verbundenen Einzelscheiben, wobei der Abstandhalter in vom Isolierscheibeninneren her luftzugänglichen Aufnahmen hygroskopisches Material, wie Silicagel oder Molekularsiebe, enthält.

Für Isolierscheiben ist der Abstandhalter nicht nur zur gegenseitigen Abstützung und Verbindung der Einzelscheiben erforderlich, sondern vor allem auch zum Erreichen eines wirklich luft- und dampfdichten Abschlusses des zwischen den Scheiben verbleibenden Zwischenraumes. Dabei soll das im Abstandhalter eingelagerte hygroskopische Material der eingeschlossenen Luft die Restfeuchtigkeit entziehen und ein Beschlagen der Scheiben sicher verhindern. Da demnach einer wirkungsgerechten Befüllung der Abstandhalter mit diesem hygroskopischen Material entscheidende Bedeutung zu-

kommt, müssen geeignete,vom Inneren der Isolierscheiben her luftzugängliche und entsprechend großräumige Aufnahmen vorgesehen sein, so daß Abstandhalter in Form von Bändern mit aneinandergereihten gelochten Kammern, geschlitzten Hohlprofilen u. dgl.Verwendung finden. Das Einfüllen des hygroskopischen Materials in diese Aufnahmen erfolgt unmittelbar vor dem Einlegen der Abstandhalter zwischen die Einzelscheiben der Isolierscheibe und bereitet einerseits wegen der Rieselfähigkeit des Materials, anderseits wegen der Öffnungen der Hohlräume bzw. Kammern beträchtliche Schwierigkeiten, die vor allem eine rationelle Isolierscheibenherstellung verhindern, keine ordentliche Dosierung des hygroskopischen Materials zulassen und beträchtliche Verluste an diesem hygroskopischen Material mit sich bringen.

Der Erfindung liegt daher die Aufgabe zugrunde, diese Mängel zu beseitigen und eine Isolierscheibe der eingangs geschilderten Art zu schaffen, die sich durch beste Qualität auszeichnet und insbesondere für eine einfache, wirtschaftliche und auch vollautomatische Herstellung geeignet ist.

Die Erfindung löst diese Aufgabe dadurch, daß die Aufnahmen des Abstandhalters mit einer Mischsubstanz aus dem hygroskopischen Material und einem Silicon, insbesondere einer kalthärtenden Einkomponenten-Siliconkautschukmasse, gefüllt sind. Das hygroskopische Material läßt sich mit der Siliconträgermasse zu einer pastösen Mischsubstanz vermengen, die vollkommen problemlos in die Aufnahmen der Abstandhalter eingebracht werden kann. Es gibt keine Gefahr eines Materialverlustes durch ein Herausrieseln mehr, die Luftzutrittsöffnungen können beliebig groß gestaltet werden, ja es genügt sogar eine offene Nut als Aufnahme für diese Mischsubstanz. Da das Silicon aushärtet und porös wird, kann das hygroskopische Material unbehindert zur Wirkung kommen und nimmt nicht nur die Luftfeuchtigkeit aus dem Scheibeninnenraum auf, sondern verhindert auch ein Freiwerden von Siliconbestandteilen, wie z. B. der zur Polymerisierung verwendeten Vernetzer, so daß auch durch das Silicon selbst kein Niederschlag an den Scheiben zu befürchten ist. Durch die Verwendung von Siliconmassen entsteht eine leicht zu verarbeitende Mischsubstanz, die das hygroskopische Material gut zur Wirkung bringt und die Möglichkeit einer einfacheren Formgebung der Abstandhalter bietet, wodurch die Isolierglasherstellung insgesamt rationeller und auch automatisierbar wird.

Bandförmige Abstandhalter, die zur Aufnahme des hygroskopischen Materials hintereinandergereihte Kammern bilden, haben sich bereits bewährt, da sie gut zwischen die Einzelscheiben eingelegt werden können, mit einer Verbindungsstelle einen geschlossenen Rahmen ergeben und auch in durchgehender Folge hergestellt werden können. Bekannt ist es dabei, zwei Streifen aus Kunststoff oder Metall, von denen wenigstens einer den Kammern entsprechende Ausformungen und der dem Isolierscheibeninneren zugeordnete Streifen im Bereich jeder Ausformung eine Luftdurchtrittsöffnung od. dgl. aufweisen, zwischen den Ausformungen miteinander zu verbinden und in diesen so entstehenden Kammern das hygroskopische Material einzufüllen. Dabei muß allerdings ein eigener Klebstoff zwischen die Streifen eingebracht werden, wozu dann die Schwierigkeit der Befüllung kommt. Durch die erfindungsgemäße Mischsubstanz ergibt sich hier eine wesentliche Vereinfachung der Herstellung, wenn einer der Streifen an seiner dem anderen Streifen zugewandten Seite kontinuierlich mit Mischsubstanz be-

- 4 -

schichtet wird und dann beide Streifen zusammengeführt und aneinandergedrückt werden, worauf das fortlaufend entstehende Abstandhalterband in an sich bekannter Weise zwischen die Einzelscheiben eingelegt
und dem jeweiligen Scheibenumfang entsprechend abgelängt wird. Beim Aufeinanderdrücken der beiden Streifen
wird durch die Ausbiegungen an den Berührungsstellen
die Mischsubstanzschicht verdrängt und das Material in
die zwischen den Berührungsstellen entstehenden Kammern
gedrückt, wobei der verbleibende Rest als Klebemittel
zum Verbinden der beiden Streifen ausgenutzt wird.
Durch die Zwischenlage der Mischsubstanz zwischen die
beiden Streifen kommt es also gleichzeitig zur Verbindung der beiden Streifen und zur Befüllung der entstehenden Kammern, wobei sich die gewünschte Füllmenge der
einzelnen Kammern durch die gewählte Schichtstärke bestimmen läßt. Nach dem Zusammenfügen der beiden Streifen liegt bereits das fertiggefüllte Abstandhalterband
vor, das dann sofort ohne weitere Maßnahme zwischen die
Scheiben eingelegt werden kann.

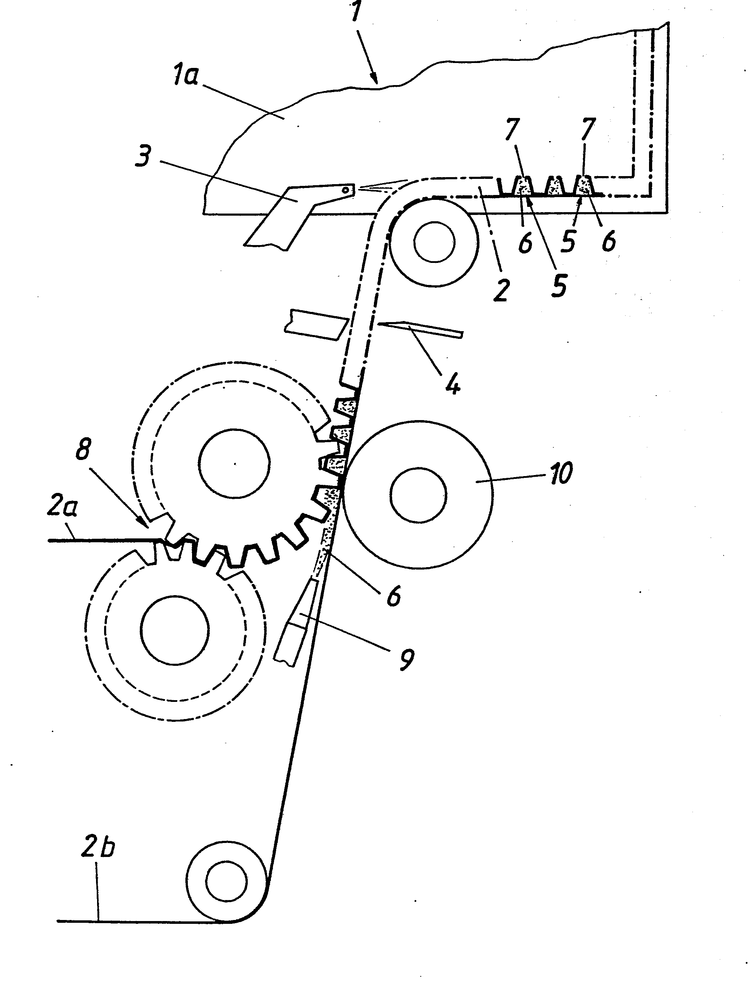

In der Zeichnung ist die Fertigung einer erfindungsgemäßen Isolierscheibe an Hand eines Anlagenschemas
veranschaulicht.

Zur Herstellung einer Isolierscheibe 1 werden
zwei Einzelscheiben 1a unter Zwischenlage eines Abstandhalters 2 zusammengefügt, wobei der bandförmige Abstandhalter 2 durch entsprechende Verschiebung und Verdrehung
der Scheiben 1a den Scheibenrändern entlang eingelegt
und gleichzeitig auf Grund des durch die Düse 3 aufgetragenen Klebstoffes mit den Scheiben 1a dicht verbunden wird. Nach einem einzigen Umlauf der Scheiben 1a
ist daher das Abstandhalterband rundum eingebracht und
die Isolierscheibe 1 fertiggestellt, wobei eine Ablängeinrichtung 4 das entsprechende Abtrennen des eingelegten Bandes vom laufend zugeführten Band besorgt.

Das Abstandhalterband 2 besteht aus zwei Streifen
2a, 2b vorzugsweise aus Aluminium, die zwischen sich
Kammern 5 zur Aufnahme einer Mischsubstanz 6 aus hygroskopischen Material und einer Einkomponenten-Siliconkautschukmasse bilden. Jede Kammer 5 weist eine ins
Scheibeninnere gerichtete Luftdurchtrittsöffnung 7 auf,
so daß das in der Mischsubstanz 6 enthaltene hygroskopische Material die im Scheibeninneren noch vorhandene
Luftfeuchtigkeit aufnehmen kann und ein Beschlagen der
Isolierscheibe 1 verhindert.

Das Abstandhalterband 2 wird in fortlaufender Folge
gefertigt, indem der eine Streifen 2a durch eine Profilierungsstation 8 und der andere Streifen 2b über eine
Beschichtungsstation 9 laufen, bevor sie zusammengeführt
und zusammengedrückt werden, wobei die Profilierungsstation 8 in den Streifen 2a den Kammern 5 entsprechende
Ausformungen prägt und die Beschichtungsstation 9 auf
den Streifen 2b eine gleichmäßige Schicht Mischsubstanz
6 aufträgt. Werden dann die beiden Bänder 2a, 2b
mittels der Druckrolle 10 aneinandergepreßt, teilen die
Ausformungen des Streifens 2a an den Berührungsstellen
die Mischsubstanzschicht auf dem Streifen 2b und verdrängen diese Mischsubstanz in die durch beide Streifen
gebildeten Kammern 5, welche beiden Streifen 2a, 2b
gleichzeitig durch die in der Mischsubstanz 6 enthaltene
Siliconkautschukmasse verklebt werden. Das Verkleben der
beiden Streifen 2a, 2b zum Abstandhalterband 2 und das
Befüllen der Kammern 5 mit hygroskopischen Material erfolgt somit in einem einzigen Arbeitsschritt mit Hilfe
der Mischsubstanz 6, so daß das Abstandhalterband 2 nach
der Druckrolle 10 sofort über die Ablängeinrichtung 4
zum Einlegen zwischen die Scheiben 1a der Isolierscheibe 1 weitergeleitet werden kann. Durch das Mischen des hygroskopischen Materials mit Siliconkautschuk ist nicht nur das Befüllen der Abstandhalter mit hygroskopischem Material vollkommen problemlos, sondern es kommt auch zu einer Vereinfachung der Abstandhalterherstellung selbst, wobei sich Siliconkautschuk und hygroskopisches Material bestens ergänzen, da einerseits der aushärtende Siliconkautschuk durch seine fehlende Diffusionsdichtheit das hygroskopische Material zur Wirkung kommen läßt, und anderseits das hygroskopische Material das Freiwerden zu Niederschlägen führender Substanzen des Siliconkautschuks verhindert.

Patentansprüche:

1. Isolierscheibe (1) aus wenigstens zwei miteinander unter Zwischenlage eines im Randbereich umlaufenden Abstandhalters (2) verbundenen Einzelscheiben (1a), wobei der Abstandhalter (2) in vom Isolierscheibeninneren her luftzugänglichen Aufnahmen (5) hygroskopisches Material, wie Silicagel oder Molekularsiebe, enthält, dadurch gekennzeichnet, daß die Aufnahmen (5) des Abstandhalters (2) mit einer Mischsubstanz (6) aus dem hygroskopischen Material und einem Silicon, insbesondere einer kalthärtenden Einkomponenten-Siliconkautschukmasse, gefüllt sind.

2. Verfahren zum Herstellen einer Isolierscheibe nach Anspruch 1, mit einem bandförmigen, als Aufnahmen (5) hintereinandergereihte Kammern bildenden Abstandhalter (2), nach dem zwei Streifen (2a, 2b) aus Kunststoff oder Metall, von denen wenigstens einer den Kammern (5) entsprechende Ausformungen und der dem Isolierscheibeninneren zugeordnete Streifen ( 2a im Bereich jeder Ausformung eine Luftdurchtrittsöffnung (7) od.dgl.aufweisen, zwischen den Ausformungen miteinander verbunden werden, dadurch gekennzeichnet, daß einer der Streifen (2b) an seiner dem anderen Streifen (2a) zugewandten Seite kontinuierlich mit Mischsubstanz (6) beschichtet wird und dann beide Streifen (2a, 2b) zusammengeführt und aneinandergedrückt werden, worauf das fortlaufend entstehende Abstandhalterband (2) in an sich bekannter Weise zwischen die Einzelscheiben (1a) eingelegt und dem jeweiligen Scheibenumfang entsprechend abgelängt wird.

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 444 780 (ECKELT) * Seite 7, Zeilen 5-27; Seite 8, Zeile 29 - Seite 9, Zeile 33; Figuren 1-7 * | 1 | E 06 B   3/66 B 01 D  53/28 |
| A | | 2 | |
| | --- | | |
| Y | DE-A-2 650 846 (PERENNATORWERK) * Seite 8, Absätze 1,2; Seite 9, Absatz 3; Seite 10, Zeilen 1-4; Figuren 1-5 * | 1 | |
| A | | 2 | |
| | --- | | |
| A | DE-A-2 614 236 (PERANNATORWERK) * Seite 6, Zeile 11 - Seite 13, Zeile 8; Figur * | 1 | RECHERCHIERTE SACHGEBIETE (Int. Cl.4) |
| | --- | | |
| A | EP-A-0 078 379 (LINGEMANN) * Seite 3, Zeile 22 - Seite 5, Zeile 24; Figuren 1,2 * | 2 | E 06 B |
| | --- | | |
| A | FR-A-2 261 995 (GIFFARD) * Seite 1, Zeile 10 - Seite 2, Zeile 24; Figuren 1,2 * | 2 | |
| | ----- | | |

Der vorliegende Recherchenbericht wurde für alle Patentansprüche erstellt.

| Recherchenort DEN HAAG | Abschlußdatum der Recherche 09-01-1986 | Prüfer DEPOORTER F. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82